# EUROPEAN PATENT SPECIFICATION

(11) **EP 0 667 500 B1**
(45) Date of publication and mention of the grant of the patent: **11.11.1998**
(21) Application number: 94309659.4
(22) Date of filing: 21.12.1994
(51) Int. Cl.: F25D 3/11, F25C 1/00, A23L 3/36, A23L 3/375

(54) **An immersion freezer**
Tauchgefrierapparat
Congélateur à immersion

(30) Priority: 14.02.1994 GB 9402780
(43) Date of publication of application: 16.08.1995
(73) Proprietor: The BOC Group plc, Windlesham Surrey GU20 6HJ (GB)
(72) Inventor: Wardle, David Grant, Tadworth, Surrey KT20 7UG (GB)
(74) Representative: Gough, Peter

(56) References cited:
- EP-A- 0 109 210
- EP-A- 0 225 081
- EP-A- 0 275 114
- EP-A- 0 611 928
- WO-A-89/10522
- FR-A- 2 530 323
- US-A- 1 944 857
- US-A- 2 552 029

## Description

The present invention relates to immersion freezers and relates particularly, but not exclusively, to immersion freezers suitable for freezing food product.

Presently known immersion freezers comprise a perforated conveyor which is, along at least part of its length, dipped into a bath of liquid refrigerant, such as liquid nitrogen. The liquid nitrogen acts to freeze the product before it is removed from the bath. In order to enable the conveyor to be snaked into and out of the liquid nitrogen and to ensure that the residence time of the product under the surface of the liquid nitrogen is sufficient to avoid under chilling, the bath must be somewhat larger than desired. It will be appreciated that the larger the bath the greater the volume of liquid nitrogen and hence the greater the waste thereof. Additionally, handling large quantities of liquid nitrogen safely can be a problem. Further to this, the conveyor can become blocked with ice and/or small particles of food product and must be removed from the liquid nitrogen for cleaning. Clearly, it will be impossible to continue operating the machine during cleaning.

An alternative immersion freezer is provided with a continuous belt which in one direction is passed through a bath of liquid nitrogen and in the other direction is passed underneath the bath itself, thereby avoiding further immersion in the liquid nitrogen. In this arrangement, it is also known to shape the bath such that the belt drops vertically into the front of the bath and is raised gradually from the rear thereof. Such an arrangement reduces the overall bath volume and hence reduces slightly the problems of liquid waste and safe handling. However, it is obviously impossible to lift the belt out of the liquid nitrogen for cleaning.

An additional problem associated with the above mentioned arrangements resides in the fact that undesirable liquid 'boil off occurs due to the cyclic cooling and heating of the conveyor as it passes into and out of the liquid nitrogen.

US-A-2552029, which is considered to be the closest prior art, discloses a cold treating machine in which objects to be cooled are pushed against each other along and round a U-shaped guide-way extending into a bath of liquid refrigerant.

WO-A-8910522 discloses a device for producing and projecting balls of ice for surface treatment purposes, the balls being extracted by a screw from a bath of liuqid refrigerant in which they are formed.

EP-A-0611928 relates to the coolng of lumpy or granular material by passing the material through a U-shaped pipe immersed in liquefied gas, the lumps being pressed together and along the pipe by a ram device.

It is an object of the present invention to reduce and possibly eliminate the problems associated with the prior art arrangements.

Accordingly, the present invention provides an immersion freezer comprising an inlet for receiving product to be frozen, an immersion zone, for containing a liquid refrigerant and through which product is passed for freezing thereby, and an outlet, through which frozen product is extracted from the freezer, in which the freezer comprises a generally U-shaped tube the ends of which act to define the inlet and outlet respectively and the lower portion of which acts to define the immersion zone, said tube being adapted for receiving product in a manner which allows product to fall to the bottom of the tube and provided with transportation means for transporting product from said bottom to the outlet, characterised in that the transportation means comprises one or more paddle members for causing an upward flow of liquid refrigerant between the bottom and the outlet of the tube thereby to at least assist in the extraction of product from the tube, and to raise the level of liquid refrigerant on the outlet side higher than that on the inlet side.

It will be appreciated that by making use of a 'U' shaped tube rather than a large bath, it will be possible to reduce significantly the quantity of liquid nitrogen being used. Additionally it is not necessary to provide a conveyor passing into and out of a bulk of liquid nitrogen, thereby avoiding the problems associated therewith.

Preferably, the inlet is provided in the upper surface of the U-shaped tube which is thereby adapted for allowing product to fall directly to bottom of the tube.

Preferably, the transportation means comprises a plurality of paddles circumferentially and/or axially spaced along a shaft extending into the U-shaped tube at the outlet end thereof, said shaft being rotatable to cause movement of the paddles and hence movement of the liquid refrigerant.

Alternatively, the transportation means comprises a spiral paddle member.

Preferably, the freezer further including extraction means for extracting product from the outlet end of the tube and directing it to a conveyor for conveying product away from the freezer

Advantageously, the extraction means comprises a scoop for scooping product off the surface of the liquid refrigerant at the outlet end of the tube and for directing said product towards the conveyor.

Preferably, the freezer further includes a conveyor for conveying product away from the freezer.

Advantageously, the freezer further includes recycling means for recycling liquid refrigerant extracted with the product back to the inlet side of said tube.

In a particularly advantageous arrangement the recycling means comprises the conveyor and a liquid return chute, said conveyor being provided with a plurality of holes therein for the passage of liquid refrigerant therethrough and said return chute being positioned for receiving liquid refrigerant drained from product being frozen.

Conveniently, the conveyor passes between the inlet and the outlet of the U shape tube and the liquid return chute is positioned beneath said conveyor.

The present invention will now be more particularly described by way of example only with reference to the accompanying drawings in which:
Figure 1 is a cross-sectional view of an immersion freezer according to the present invention; and

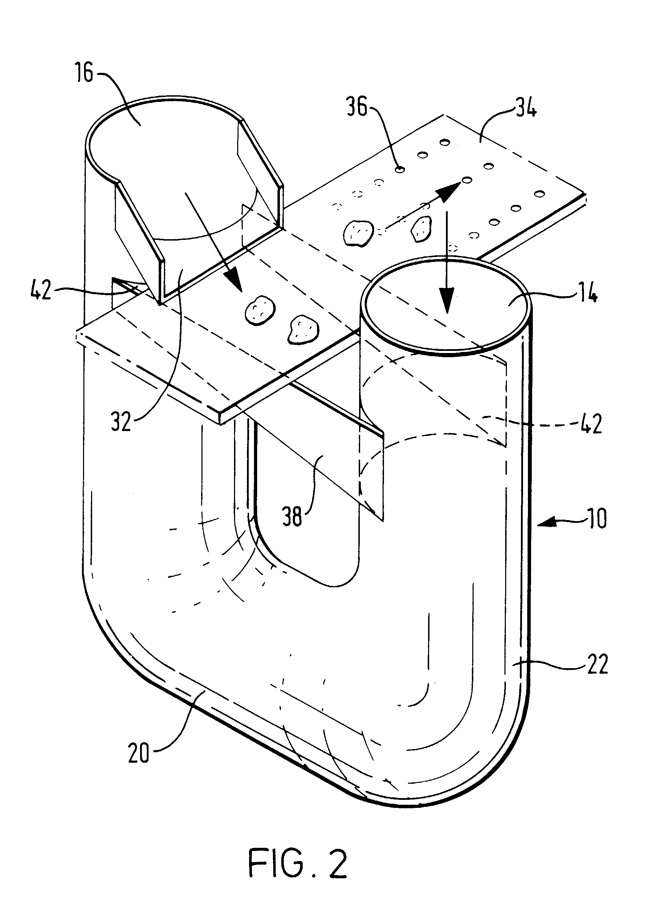

Figure 2 is an isometric projection of the freezer shown in cross-section in Figure 1.

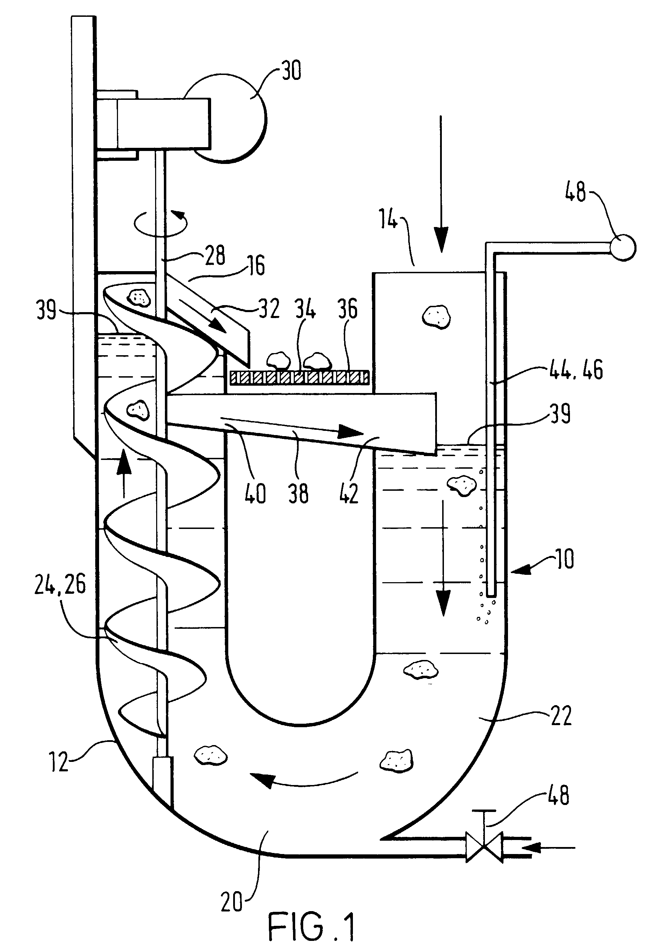

Referring now to the drawings in general, but particularly to Figure 1, an immersion freezer 10 comprises a generally 'U' shaped tube 12 having an inlet 14 at a first end and an outlet 16 at a second end. The lower portion 18 of the tube 12 acts to define an immersion zone 20 filled with liquid nitrogen 22. The inlet 14 and outlet 16 are shown at the end of the U, however, it will be appreciated that one or other of them could be positioned at the side thereof. A transportation means 24 in the form of, for example, a spiral paddle member 26 or a plurality of individual paddles circumferentially and axially spaced from each other (not shown) is provided in the outlet side of the tube 12. The paddle member is mounted on a rotatable shaft 28 and driven by motor 30. An extraction means in the form of chute 32 is provided adjacent to the outlet for directing frozen product towards a conveyor 34, which acts to take the product away from the freezing apparatus. A plurality of holes 36 are provided in the conveyor to allow any liquid nitrogen deposited thereon to pass therethrough and onto a liquid return chute 38 positioned for receiving excess liquid nitrogen from the outlet and returning it to the inlet side of the tube. The chute itself extends between two holes 40 and 42 provided on the outlet and the inlet sides respectively. The operation of paddle member 26 acts to raise the level of nitrogen on the outlet side higher than that on the inlet side and hence the chute 38 can extend generally downwardly between a position just below the surface 39 of liquid nitrogen at the outlet side to a position just above the surface 39 of liquid nitrogen at the inlet side. This arrangement allows the chute to return liquid nitrogen without pump assistance. A level monitor in the form of, for example, a bubbler and back pressure monitor 44, 46 respectively is provided for monitoring the nitrogen level so as to facilitate level maintenance via valve 48 connected to a source of liquid nitrogen (not shown).

In operation, food product is dropped into inlet 14 where it sinks to the bottom of the immersion zone 20 partially under gravity and partially due to the action of the transportation means 24 which draw liquid nitrogen and food product from the lower portion of the tube and raise it above the level of liquid nitrogen at the inlet side. Food product, once raised to the surface at the outlet side, is scooped off the surface and directed down chute 32 and onto conveyor 34 which acts to take it away from the freezer. Excess nitrogen is passed through the holes 36 provided in the conveyor and onto chute 38 for recycling.

Clearly, as the present arrangement avoids the use of a conveyor passing into and out of a bulk of liquid nitrogen, the problems associated therewith are avoided. Only excess liquid nitrogen is passed through the conveyor 34 and whilst this will cause a certain amount of crust freezing it will not be as severe as in the prior arrangements.

It will be appreciated that by separating the conveyor 34 from the bulk of the liquid nitrogen used for chilling purposes it will be possible to clean the belt without having to drain the freezing zone of liquid nitrogen. Additionally, it will be possible to clean the freezing tube 12 without first removing the conveyor 34.

## Claims

1. An immersion freezer (10) comprising an inlet (14) for receiving product to be frozen, an immersion zone (20) for containing a liquid refrigerant (22) and through which product is passed for freezing thereby and an outlet (16) through which frozen product is extracted from the freezer, the freezer (10) comprising a generally U-shaped tube the ends of which act to define the inlet (14) and outlet (16) respectively and the lower portion of which acts to define the immersion zone (20), said tube being adapted for receiving product in a manner which allows product to fall to the bottom of the tube and provided with transportation means (24) for transporting product from said bottom to the outlet (16), characterised in that the transportation means (24) comprises one or more paddle members (26) for causing an upward flow of liquid refrigerant between the bottom and the outlet (16) of the tube thereby to at least assist in the extraction of product from the tube, and to raise the level of liquid refrigerant on the outlet side (16) higher than that on the inlet side (14).

2. An immersion freezer as claimed in Claim 1 characterised in that the inlet (14) is provided in the upper surface of the U-shaped tube which is thereby adapted for allowing product to fall directly into the bottom of the tube.

3. An immersion freezer as claimed in Claim 1 or Claim 2 characterised in that the transportation means (24) comprises a plurality of paddles (26) circumferentially and/or axially spaced along a shaft extending into the U-shaped tube at the outlet (16) end thereof, said shaft being rotatable to cause movement of the paddles (26) and hence movement of the liquid refrigerant.

4. An immersion freezer as claimed in Claim 1, Claim 2 or Claim 3 characterised in that the transportation means comprises a spiral paddle member (26).

5. An immersion freezer as claimed in any preceding Claim characterised by extraction means (32) for extracting product from the outlet (16) end of the tube and directing it to a conveyor (34) for conveying product away from the freezer (10).

6. An immersion freezer as claimed in Claim 5 characterised in that the extraction means comprises a scoop (32) for scooping product off the surface (39) of the liquid refrigerant at the outlet end of the tube and for directing said product towards the conveyor (34).

7. An immersion freezer as claimed in Claim 5 or Claim 6 characterised by a conveyor (34) for conveying product away from said freezer.

8. An immersion freezer as claimed in any preceding Claim characterised by recycling means (38) for recycling liquid refrigerant extracted with the product back to the inlet side of said tube.

9. An immersion freezer as claimed in Claim 8 characterised in that the recycling means comprises the conveyor (34) and a liquid return chute (38), said conveyor (34) being provided with a plurality of holes (36) therein for the passage of liquid refrigerant therethrough and said return chute (38) being positioned for receiving liquid refrigerant drained from product being frozen.

10. An immersion freezer as claimed in Claim 9 characterised in that the conveyor (34) passes between the inlet (14) and the outlet (16) of the U-shape tube and the liquid return chute (38) is positioned beneath said conveyor (34).

## Patentansprüche

1. Tauchgefrierer (10) mit einem Einlaß (14) zur Aufnahme von zu gefrierenden Produkten, einer Tauchzone (20) zur Aufnahme eines flüssigen Kühlmittels (22) und durch welche die Produkte zum Gefrieren hindurchpassiert werden, und einem Auslaß (16), durch welchen gefrorene Produkte aus dem Gefrierer herausgeführt werden, wobei der Gefrierer (10) aus einem etwa U-förmigen Rohr besteht, dessen Enden den Einlaß (14) bzw. den Auslaß (16) bilden und dessen unterer Teil als Tauchzone (20) dient und das Rohr zur Aufnahme von Produkten in einer Weise, welche die Produkte auf den Boden des Rohres fallen läßt, ausgelegt und mit Transportmitteln (24) zum Transportieren der Produkte von dem Boden zum Auslaß (16) versehen ist, dadurch gekennzeichnet, daß die Transportmittel (24) ein oder mehrere Paddelelemente (26) aufweisen, um eine Aufwärtsströmung des flüssigen Kühlmittels zwischen dem Boden und dem Auslaß (16) des Rohres zu bewirken, um zumindest das Herausführen der Produkte aus dem Rohr zu unterstützen und den Pegel des flüssigen Kühlmittels an der Auslaßseite (16) über denjenigen an der Einlaßseite (14) anzuheben.

2. Tauchgefrierer nach Anspruch 1, dadurch gekennzeichnet, daß der Einlaß (14) in der Oberseite des U-förmigen Rohres gebildet ist, das dadurch dafür ausgelegt ist, daß Produkte direkt in den Bodenbereich des Rohres fallen können.

3. Tauchgefrierer nach Anspruch 1 oder 2, dadurch gekennzeichnet, daß die Transportmittel (24) eine Mehrzahl von Paddeln (26) aufweisen, die mit umfangsmäßigen und/oder axialen Abständen entlang einer Welle angeordnet sind, die in das U-förmige Rohr an dessen Auslaßende (16) hineinragt und drehbar ist, um die Bewegung der Paddel (26) und dadurch die Bewegung des flüssigen Kühlmittels zu bewirken.

4. Tauchgefrierer nach Anspruch 1, 2 oder 3, dadurch gekennzeichnet, daß die Transportmittel ein spiralförmiges Paddelelement (26) aufweisen.

5. Tauchgefrierer nach einem der vorhergehenden Ansprüche, gekennzeichnet durch Ausziehmittel (32) zum Herausziehen von Produkten aus dem Auslaßende (16) des Rohres und zum Leiten derselben in einen Förderer (34) zur Förderung der Produkte vom Gefrierer (10) weg.

6. Tauchgefrierer nach Anspruch 5, dadurch gekennzeichnet, daß die Ausziehmittel einen Löffel (32) zum Schöpfen der Produkte von der Oberfläche (39) des flüssigen Kühlmittels am Auslaßende des Rohres und zum Befördern der Produkte zum Förderer (34) aufweisen.

7. Tauchgefrierer nach Anspruch 5 oder 6, gekennzeichnet durch einen Förderer (34) zum Fördern der Produkte von dem Gefrierer weg.

8. Tauchgefrierer nach einem der vorhergehenden Ansprüche, gekennzeichnet durch Rezirkulationsmittel (38) zum Rezirkulieren von mit den Produkten abgezogenen flüssigem Kühlmittel zurück zur Einlaßseite des Rohres.

9. Tauchgefrierer nach Anspruch 8, dadurch gekennzeichnet, daß die Rezirkulationsmittel den Förderer (34) und eine Flüssigkeitsrückführrinne (38) umfassen, wobei der Förderer (34) mit einer Mehrzahl von Öffnungen (36) für den Durchtritt von flüssigem Kühlmittel versehen ist und die Rückführrinne (38) zur Aufnahme von flüssigem Kühlmittel positioniert ist, das von den gefrorenen Produkten abläuft.

10. Tauchgefrierer nach Anspruch 9, dadurch gekennzeichnet, daß der Förderer (34) zwischen dem Einlaß (14) und dem Auslaß (16) des U-förmigen Rohres verläuft und die Flüssigkeitsrückführrinne (38) unterhalb des Förderers (34) positioniert ist.

## Revendications

1. Congélateur par immersion (10) comprenant une entrée (14) destinée à recevoir le produit à congeler, une zone d'immersion (20) destinée à contenir un frigorigène liquide (22) et dans laquelle on fait passer le produit pour qu'il soit congelé par celui-ci, et une sortie (16) par laquelle le produit congelé est extrait du congélateur, le congélateur (10) comprenant un tube de forme générale en U dont les extrémités servent à définir respectivement l'entrée (14) et la sortie (16) et dont la partie inférieure sert à définir la zone d'immersion (20), ledit tube étant adapté pour recevoir le produit d'une manière autorisant le produit à tomber au fond du tube et étant muni de moyens d'acheminement (24) pour acheminer le produit dudit fond jusqu'à la sortie (16)**, *caractérisé en ce que*** les moyens d'acheminement (24) comprennent un ou plusieurs éléments de palettes (26) destinés à provoquer un flux montant de frigorigène liquide entre le fond et la sortie (16) du tube afin ainsi d'au moins aider à l'extraction du produit hors du tube et de produire une élévation du niveau du frigorigène liquide côté sortie (16) par rapport au côté entrée (14).

2. Congélateur par immersion selon la Revendication 1, ***caractérisé en ce que*** l'entrée (14) est ménagée dans la surface supérieure du tube en forme de U qui est ainsi adapté pour autoriser le produit à tomber directement au fond du tube.

3. Congélateur par immersion selon la Revendication 1 ou la Revendication 2, ***caractérisé en ce que*** les moyens d'acheminement (24) comprennent une pluralité de palettes (26) espacées circonférentiellement et/ou axialement sur un arbre s'étendant dans le tube en forme de U à l'extrémité sortie (16) de celui-ci, ledit arbre pouvant être entraîné en rotation pour provoquer le déplacement des palettes (26) et, en conséquence, le déplacement du frigorigène liquide.

4. Congélateur par immersion selon la Revendication 1, la Revendication 2 ou la Revendication 3, ***caractérisé en ce que*** les moyens d'acheminement comprennent un élément de palette en spirale (26).

5. Congélateur par immersion selon l'une quelconque des Revendications précédentes, ***caractérisé par*** des moyens d'extraction (32) pour extraire un produit de l'extrémité sortie (16) du tube et le diriger vers un transporteur (34) destiné à éloigner le produit du congélateur (10).

6. Congélateur par immersion selon la Revendication 5, ***caractérisé en ce que*** les moyens d'extraction comprennent une cuiller (32) pour ramasser le produit à la surface (39) du frigorigène liquide à l'extrémité côté sortie du tube et pour diriger ledit produit vers le transporteur (34).

7. Congélateur par immersion selon la Revendication 5 ou la Revendication 6, ***caractérisé par*** un transporteur (34) pour éloigner le produit dudit congélateur.

8. Congélateur par immersion selon l'une quelconque des Revendications précédentes, ***caractérisé par*** des moyens de recyclage (38) pour recycler le frigorigène liquide extrait avec le produit côté entrée dudit tube.

9. Congélateur par immersion selon la Revendication 8, ***caractérisé en ce que*** les moyens de recyclage comprennent le transporteur (34) et une goulotte (38) de retour du liquide, ledit transporteur (34) étant pourvu d'une pluralité de trous (36) destinés au passage du frigorigène liquide et ladite goulotte (38) de retour étant positionnée pour recevoir le frigorigène liquide égoutté du produit congelé.

10. Congélateur par immersion selon la Revendication 9, ***caractérisé en ce que*** le transporteur (34) passe entre l'entrée (14) et la sortie (16) du tube en forme de U et ***en ce que*** la goulotte (38) de retour du liquide est positionnée au-dessous dudit transporteur (34).
